# EUROPEAN PATENT APPLICATION

(11) **EP 2 940 331 A1**
(43) Date of publication of application: **04.11.2015**
(21) Application number: 14166879.8
(22) Date of filing: 02.05.2014
(51) Int. Cl.: F16C 35/067, F16C 17/10, F16C 23/04

(54) **Bearing with an outer race interference fitable in a range of housing bore sizes**

(71) Applicant: Schaublin SA, 2800 Delémont (CH)
(72) Inventor: Charmillot, Philippe, CH-2832 Rebeuvelier (CH)
(74) Representative: Seemann & Partner

(57) **Abstract**

A bearing(10) includes an outer race (12) defining a first exterior surface (12E) and an interior area defined by an arcuate interior surface (22). The bearing also includes an inner race (14) defining a second exterior surface (24). The second exterior surface is arcuate and complimentary to the arcuate interior surface. The inner race is disposed at least partially in the interior area (17) and is rotatable relative to the outer race. The first exterior surface has a plurality of protrusions (12P) extending therefrom. The protrusions are deformable in response to engagement with an interior surface defined by a bore of a housing. The protrusions are configured to create a predetermined gripping force to releaseably grip an inner surface defined by the bore of the housing for a predetermined dimensional tolerance of the bore.

## Description

### FIELD OF THE INVENTION

The present invention relates generally to a bearing having an outer race that is interference fitable in a housing bore, and more particularly to an outer race having an outer surface configured to be interference fitable in a range of housing bore sizes.

### BACKGROUND OF THE INVENTION

Known bearings include journal bearings wherein a shaft is rotatably supported by an outer race, spherical bearings wherein a ball is rotatably held in an outer ring and roller bearings having rolling elements that are held between an inner race and an outer race. Typically the outer race defines a generally cylindrical exterior surface having a precision machined outside diameter. The outside diameter is sized to be friction fit or press fit with a predetermined gripping force into a specific sized bore of a housing. Typically, the outer races fit into a narrow range of bore sizes. In addition, installation of the outer race into the bore and removal of the outer race from the bore can cause wear of the exterior surface of the bearing and/or the inner surface defined by the bore of the housing. Thus, after even one cycle of installation and removal of the outer race in the bore, the gripping force can become insufficient to secure the outer race in the housing and the housing and/or bearing must be repaired or replaced. In addition, operating torque of the bearing can undesirably increase as a result of press fitting the bearing into a bore of a housing.

### SUMMARY

There is disclosed herein a bearing having an outer race defining a first exterior surface and an interior area defined by an arcuate interior surface. The bearing also includes an inner race defining a second exterior surface. The second exterior surface is arcuate and complimentary to the arcuate interior surface. The inner race is disposed at least partially in the interior area and is rotatable relative to the outer race. The first exterior surface has a plurality of protrusions extending therefrom. The protrusions are deformable in response to engagement with an interior surface defined by a bore of a housing. The protrusions are configured to create a predetermined gripping force to releaseably grip an inner surface defined by the bore of the housing for a predetermined dimensional tolerance of the bore.

### DESCRIPTION OF THE DRAWINGS

FIG. 1 is photograph of a spherical bearing of the present invention;
FIG. 2 is photograph of a portion of the spherical bearing of FIG. 1;
FIG. 3A is a cross sectional view of the spherical bearing of FIG.1, taken across line 3-3;
FIG. 3B is a cross sectional view of the spherical bearing of FIG.1, having a bore extending through an inner member;
FIG. 3C is a cross sectional view of a roller bearing embodiment of the present invention;
FIG. 3D is a cross sectional view of a journal bearing embodiment of the present invention;
FIG. 4A is a cross sectional view of the spherical bearing of FIG.1, taken across line 4-4;
FIG. 4B is a cross sectional view of the roller bearing embodiment of FIG. 3C;
FIG. 4C is a cross sectional view of the journal bearing embodiment of FIG. 3D;
FIG. 5A is a cross sectional view of another surface configuration of the bearing of the present invention;
FIG. 5B is a side view of the surface configuration of FIG. 5A;
FIG. 5C is a cross sectional view of another surface configuration of the bearing of the present invention;
FIG. 5D is a schematic illustration of a knurled surface configuration of the bearing of the present invention;
FIG. 6 is a cross sectional view of a housing for receiving the bearing of FIG. 1;
FIG. 7 is a cross sectional view of the bearing of FIG. 1 installed in the housing of FIG. 6; and
FIG. 8 is an enlarged view of a portion of the exterior surface of the bearing of FIG. 1, the exterior surface being shown in a deformed state and engaging an inner surface defined by the housing of FIG. 6.

### DETAILED DESCRIPTION OF THE INVENTION

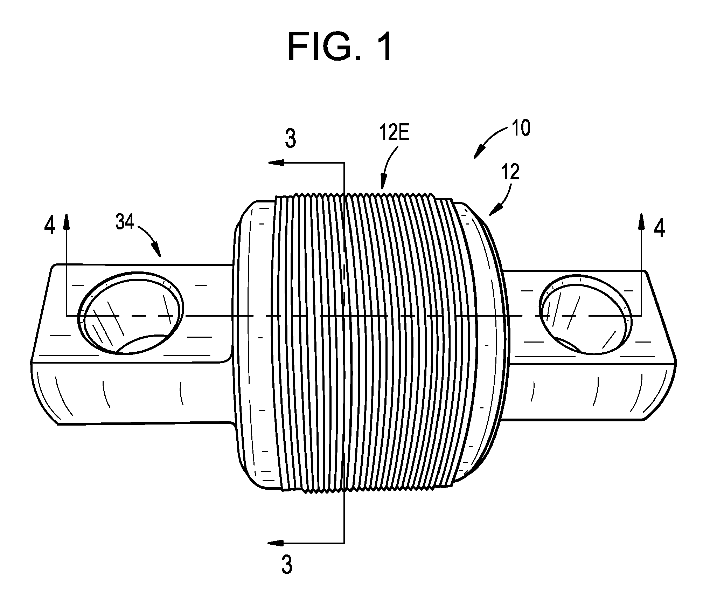

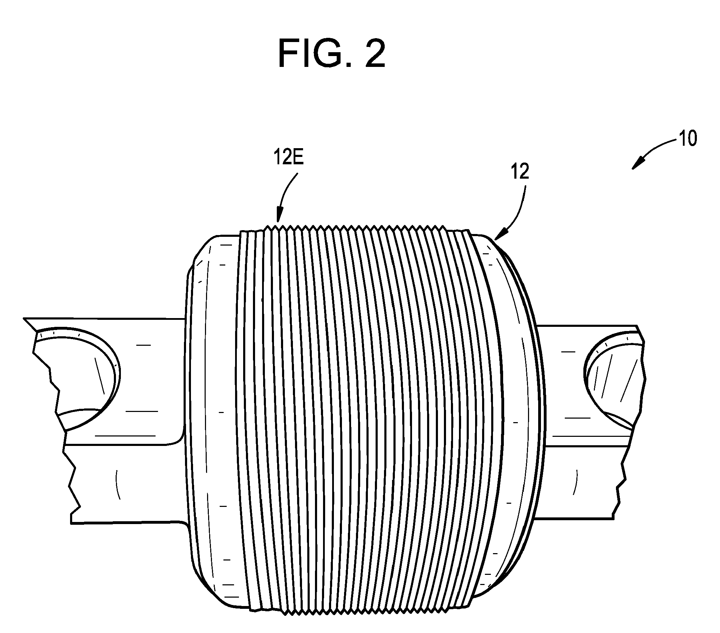

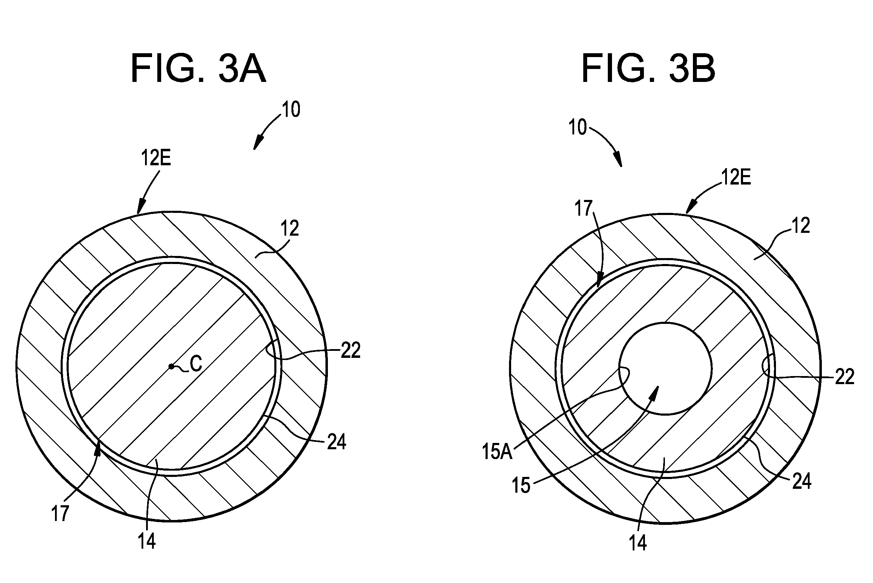

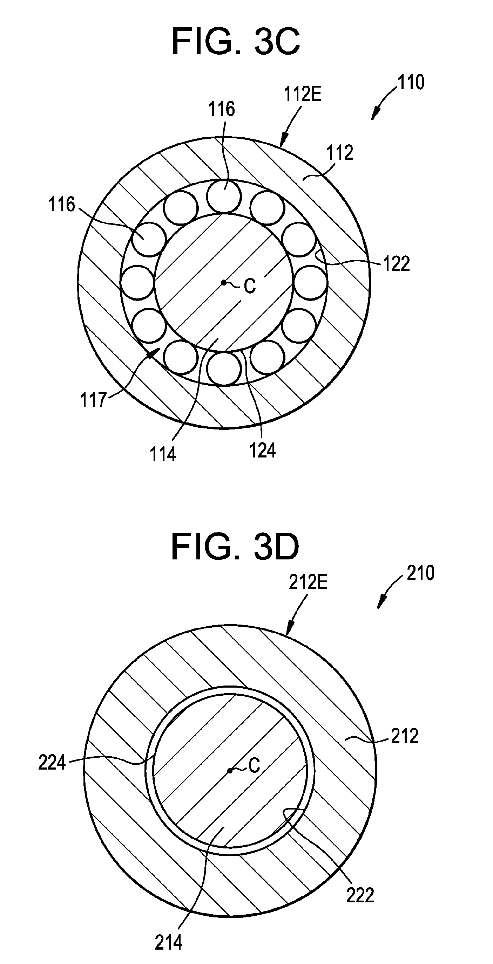

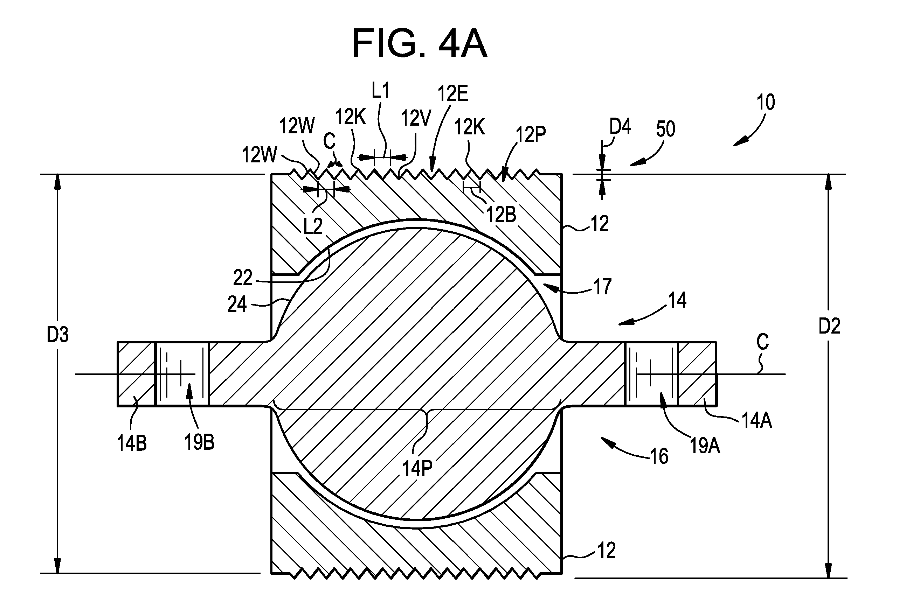

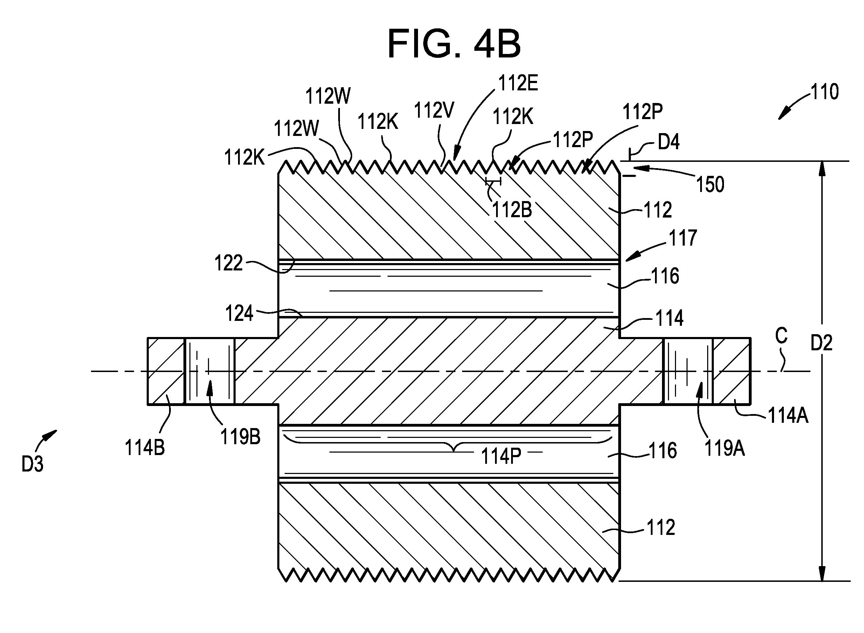

Referring to FIGS. 1 and 2, a bearing is generally designated by the numeral 10. As shown in FIGS. 3A and 4A, the bearing 10 includes an outer race 12 defining a generally cylindrical exterior surface 12E and a spherical interior surface 22 which defines a bore 17 extending through the outer race 12. As described further herein, the cylindrical exterior surface 12E is configured to releaseably grip an inner surface defined by the bore of the housing, via an interference fit. The bearing 10 includes an inner race 14. The inner race 14 has a generally spherical exterior surface 24. As shown in FIG. 4A, a portion 14P of the inner race 14 is disposed in the bore 17. The spherical interior surface 22 of the outer race 12 and the spherical exterior surface 24 on the inner race 14 slidingly engage one another so the inner race 14 is rotatable and mis-allignable relative to the outer race 12. Although the exterior surface 12E is shown and described as being generally cylindrical, the present invention is not limited in this regard as other configurations may be employed including but not limited to rectangular and octagonal cross sections. While the bearing of FIGS. 3A and 4A are described as being spherical, the present invention is not limited in this regard as the exterior surface 12E of the present invention may be employed with other types of bearings including but not limited to roller bearings and journal bearings. For example, a roller bearing illustrated in FIGS. 3C and 4B is similar to the bearing 10 of FIGS. 1, 2, 3A and 4A. Therefore, similar elements are designated with the same element number preceded by the numeral 1. The roller bearing 110 shown in FIGS. 3C and 4B includes an outer race 112 defining a generally cylindrical exterior surface 112E and an interior surface 122 which defines a bore 117 extending through the outer race 112. The bearing 110 includes an inner race 114. The inner race 114 has a generally cylindrical exterior surface 124. As shown in FIG. 4B, a portion 114P of the inner race 114 is disposed in the bore 117. A plurality of rolling elements, for example, needle rollers 116, are disposed between the interior surface 122 of the outer race 112 and the exterior surface 124 on the inner race 114, so that the inner race 114 is rotatable relative to the outer race 112. While the rolling elements are shown and described as being needle rollers 116, the present invention is not limited in this regard as balls may be employed for the rolling elements or the rolling elements may be eliminated and a lubricious liner may be disposed between the interior surface 122 and the exterior surface 124.

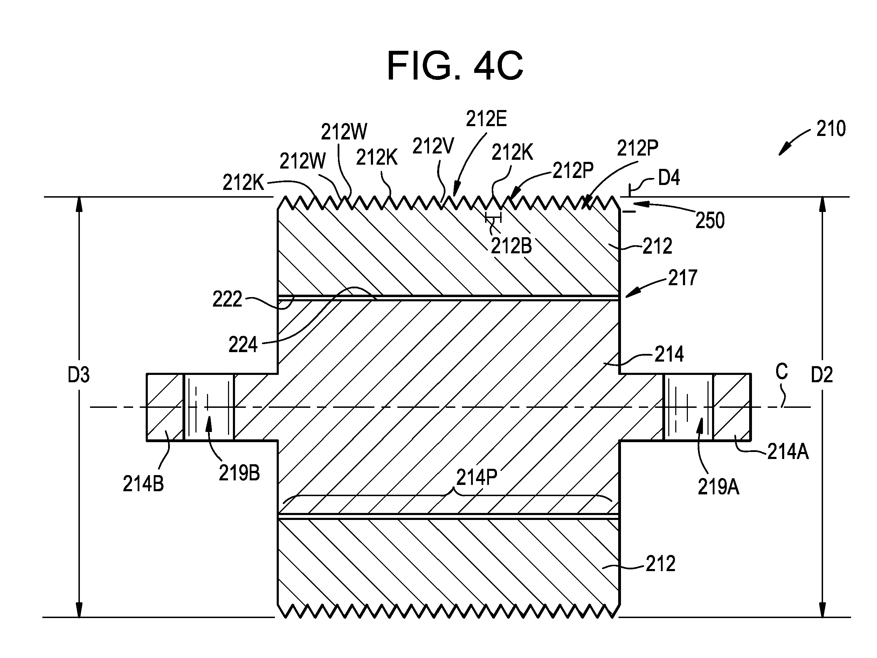

A journal bearing illustrated in FIGS. 3D and 4C is similar to the bearing 10 of FIGS. 1, 2, 3A and 4A. Therefore, similar elements are designated with the same element number preceded by the numeral 2. The journal bearing 210 shown in FIGS. 3D and 4C includes an outer race 212 defining a generally cylindrical exterior surface 212E and an interior surface 222 which defines a bore 217 extending through the outer race 212. The bearing 210 includes an inner race 214. The inner race 214 has a generally cylindrical exterior surface 224. As shown in FIG. 4C, a portion 214P of the inner race 214 is disposed in the bore 217. The inner race 214 is rotatable relative to the outer race 212.

As illustrated in FIG. 4A, the inner race 14 includes a mounting tab 14A and 14B extending from each opposing axial end of thereof. The mounting tab 14A has a bore 19A extending therethrough and the mounting tab 14B has a bore 19B extending therethrough for receiving a pin, stud, fastener or the like. While the inner race 14 is shown and described as having the mounting tabs 14A and 14B extending therefrom, the present invention is not limited in this regard as the inner race 14 may have an inner surface 15A defining a bore 15 extending through the inner race 14, as shown for example, in FIG. 3B.

Referring to FIG. 4A, the exterior surface 12E of the outer race 12 is defined by a plurality of concentric circumferential valleys 12V extending radially inward and a plurality of concentric circumferential protrusions 12P extending radially outward from a central axis C. Each of the protrusions 12P have a base portion 12B and two side walls 12W extending at an angle G towards each other and join at a peak 12K. The protrusions 12P have a generally triangular cross section. As shown in FIG. 4A, the outer race 12 has an outside diameter D2 when measured between opposing axial ends of the peaks 12K and a diameter D3 when measured between opposing axial ends of the valleys 12V. In one embodiment, adjacent peaks 12K are axially spaced apart from one another by a distance L1 of about 1.0 mm to about 1.5 mm; and adjacent valleys 12V are spaced axially apart from one another by a distance L2 of about 1.0 mm to about 1.5 mm.

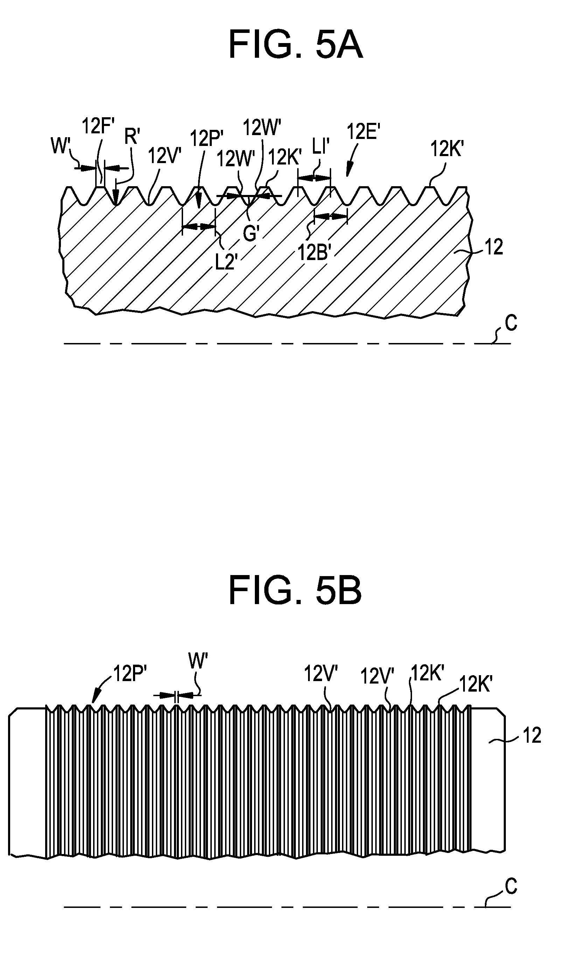

In another embodiment illustrated in FIGS. 5A and 5B, the exterior surface is designated by the element 12E' is defined by a plurality of concentric circumferential valleys 12V' extending radially inward and a plurality of concentric circumferential protrusions 12P' extending radially outward from a central axis C. Each of the protrusions 12P' have a base portion 12B' and two side walls 12W' extending at an angle G' of about 55 degree towards each other and join at a peak 12K'. The protrusions 12P' have a generally triangular cross section. In particular, the peaks 12K' are truncated and define a flat portion 12F' having a width W of about 0.20mm. Each of the valleys 12V' has a radius of curvature R' of about 0.14 mm. As shown in FIG. 4A, the outer race 12 has an outside diameter D2 when measured between opposing radial ends of the peaks 12K' and a diameter D3 when measured between opposing radial ends of the valleys 12V'. The height of the protrusions 12K' are about 0.61 mm to about 0.62 mm (i.e., D2 - D3). In one embodiment, adjacent peaks 12K' are axially spaced apart from one another by a distance L1' (measured between respective centerlines of the adjacent peaks 12K') of about 1.0 mm to about 1.5 mm; and adjacent valleys 12V' are spaced axially apart from one another by a distance L2'(measured between respective centerlines of the adjacent valleys 12V') of about 1.0 mm to about 1.5 mm.

As a result of testing and experimentation, the inventor has surprisingly discovered that the particular configuration of the exterior surface 12E' as shown in FIGS. 5A and 5B and having: 1) adjacent peaks 12K' are axially spaced apart from one another by a distance L1 of about 1.0 mm to about 1.5 mm; 2) adjacent valleys 12V' are spaced axially apart from one another by a distance L2 of about 1.0 mm to about 1.5 mm; 3) truncated peaks 12K' that define a flat portion 12F' having a width W of about 0.02 mm; 4) valleys 12V' with the radius of curvature R' of about 0.14 mm; 5) an angle G' between valleys 12V' of about 55 degrees and/or 6) the height of the protrusions 12K' at about 0.61 mm to about 0.62 mm, were interference fittable into the inner surface 44 defined by the bore 46 of the housing 40 for a predetermined dimensional tolerance (e.g., 0.2 mm) of the bore 46 and having a gripping force of 2 to 5 metric tons. A description of the tests and results are provided below.

In addition, the inventors conducted testing of bearings with exterior surfaces 12E other than that described herein with reference to FIGS. 5A and 5B and found less repeatable pull out forces.

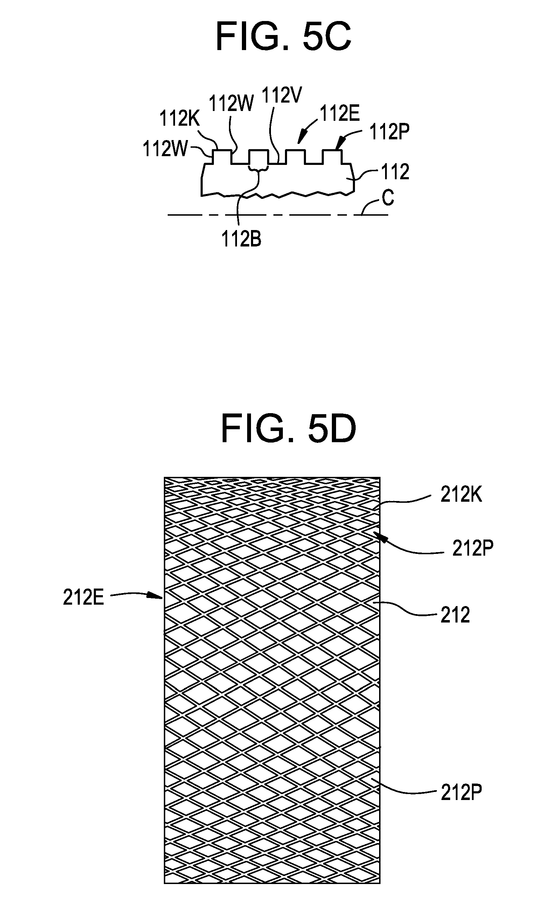

The outer race shown in FIG. 5C is similar to the outer race 12 of FIGS. 5A and 5B. Therefore, like elements are designated with like reference numbers preceded by the numeral 1. Referring to FIG. 5C, the outer race 112 includes a plurality of concentric circumferential valleys 112V and a plurality of concentric circumferential protrusions 112K extending radially outward, away from the central axis C. Each of the protrusions 112P has a base portion 112B and two side walls 112W. The side walls 112W are parallel to one another and extend radially outward, away from the central axis C. The two side walls 112W terminate at a flat peak 112K. The protrusions 112P have generally rectangular cross sections.

In another embodiment illustrated in FIG. 5D, the outer race is similar to the outer race 12 of FIGS. 5A and 5B. Therefore, like elements are designated with like reference numbers preceded by the numeral 2. Referring to FIG. 5D, the outer race 212 defines a knurled surface 212E that includes a plurality of protrusions 212P each having a peak 212K. Each of the protrusions 212P has a generally pyramidal shape. In one embodiment, the peaks 212P are truncated and define a flat portion.

While the protrusions 12P are described as having a triangular cross section, the protrusions 112P as having a rectangular cross section and the protrusions 212P as being pyramidal shaped, the present invention is not limited in this regard as protrusions of any configuration may be employed including but not limited to threads, pins, rods, and curved or cup shaped peaks without departing from the broader aspects disclosed herein.

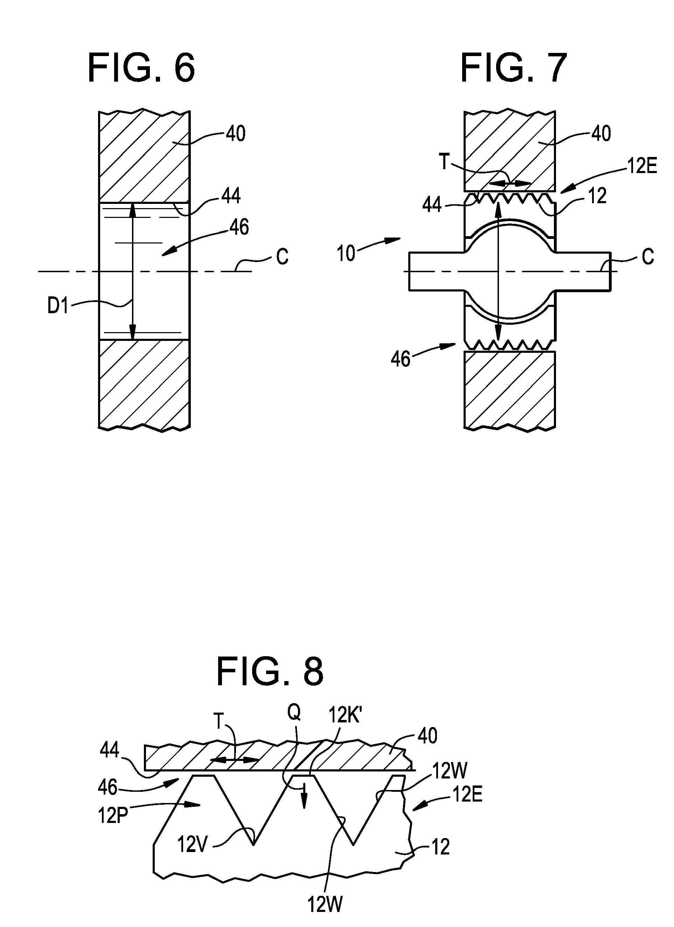

The bearing 10 is configured to be interference fit into a housing 40 having an inner surface 44 that defines a cylindrical bore 46 extending therethrough, as shown in FIG. 6. The bore 46 has an inside diameter D1. Although, the bore 46 is shown and described as being generally cylindrical, the present invention is not limited in this regard as other configurations may be employed including but not limited to rectangular and octagonal cross sections.

Referring to FIGS. 7 and 8, the bearing 10 is interference fit into the bore 46 of the housing 40 so that the peaks 12K are deformable in response to engagement with the interior surface 44 defined by the bore 46 of the housing 40. For example, the peaks are compressed radially inward in the direction of the arrow Q by the inner surface 44 to provide an axially directed gripping force (e.g., a press-in or pull-out force) as indicated by the arrow T. The gripping force T is about 2 metric tons to about 5 metric tons to enable the protrusions 12P to releasably grip the inner surface 44 of the bore 40. In one embodiment the gripping force T is 5.5 metric tons. Compression of the peaks 12K causes the diameter, when measured between opposing radial ends of the peaks 12K, to decrease to a value approximately equal to the inside diameter D1 of the bore 46 and less than D2 and greater than D3.

The protrusions 12P are slidably engageable with the inner surface 44 of the housing for a predetermined number of installations and removals therefrom while maintaining the gripping force T and the predetermined dimensional tolerance. Thus, the protrusions 12P have mechanical properties (e.g., hardness, elasticity, and wear resistance) to preclude degradation of the gripping force T and the predetermined dimensional tolerance for the duration of life defined by the predetermined number of installations and removals.

The protrusions 12P are configured to maintain the gripping force T for a predetermined range of inside diameters D1. For example, protrusions 12P are configured to maintain the gripping force T for a predetermined inside diameter D1 tolerance of 0.2 mm or 0.25 mm.

As shown in FIG. 4 the protrusions 12P define a compression absorption annulus 50 that has a thickness D4 which is about equal to the difference between the outside diameter D2 and the diameter D3. In one embodiment, the difference between the outside diameter D2 and the diameter D3, i.e., the height of the protrusions is about 0.61 mm to about 0.62 mm. The compression absorption annulus 50 attenuates force transmission radially inward through the outer race 12 to the inner race 14 to maintain an operating torque of the bearing at a predetermined magnitude. Thus, when the bearing 10 is interference fit into the bore 46 of the housing 40, there is no degradation of operation torque of the bearing. The compression absorption annulus allows the bearing 10 to be installed in bores having a diameter tolerance of 0.2 mm without affecting the operational torque of the bearing 10. In one embodiment, the compression absorption annulus allows the bearing 10 to be installed in bores having a diameter tolerance of 0.25 mm without affecting the operational torque of the bearing 10.

The protrusions 12P', 112P and 212P have similar attributes and functionality as the peaks 12P, including but not limited to mechanical properties, having a compression absorption annulus, maintaining the gripping force T and maintaining the predetermined dimensional tolerance.

### EXAMPLES

The inventor and his employer have conducted testing and experimentation to arrive at a suitable exterior surface 12E'as shown in FIGS. 5A and 5B that results in the most repeatable gripping force T for the widest range of inside diameters D1 of the bore 46.

### Test Series 1

In test series 1 three bearings 10 (i.e., T1, T2 and T3) having an outside diameter D2 of 61.7 mm and the cylindrical exterior surface 12E' as illustrated and described herein with reference to FIGS. 5A and 5B were inserted and removed, numerous times from one of the bores 46 defined by the housing 40. The initial inside diameter D1 of the bore 46 for the T1 test was 61.6 mm, which represented a 0.1 mm interference fit. The initial inside diameter D1 of the bore 46 for the T2 test was 61.5 mm, which represented a 0.2 mm interference fit. The initial inside diameter D1 of the bore 46 for the T3 test was 61.4 mm, which represented a 0.3 mm interference fit. Thus, the tolerance in the inside diameter D1 encompassed a range of 0.2 mm (i.e., from 61.6 mm to 61.4 mm). The bearing 10 was manufactured from an alloy steel and having a hardness of about 45 Rockwell C scale. The housing 40 was manufactured from an alloy steel having a hardness of about 30 Rockwell C scale.

An operating torque in Newton-meters (Nm) for the bearing 10 was measured and recorded before and after each cycle of insertion into the bore 46 and removal of the bearing 10 from the bore 46. The inside diameter D1 of the bore 46 was measured before and after each cycle of insertion into the bore 46 and removal of the bearing 10 from the bore 46. The outside diameter D2 of the bearing 10 was measured before and after each cycle of insertion into the bore 46 and removal of the bearing 10 from the bore 46. The condition of the exterior surface 12E' and the inner surface 44 was inspected before and after each cycle of insertion into the bore 46 and removal of the bearing 10 from the bore 46. The gripping force Tᵢₙ in metric tons (symbol t) corresponding to the magnitude of the force required for insertion into the bore 46 of the housing 40 was measured and recorded. The T1 test was conducted for five cycles of insertion into the bore 46 and removal of the bearing 10 from the bore 46. The T2 test was conducted for three cycles of insertion into the bore 46 and removal of the bearing 10 from the bore 46. The T3 test was conducted for two cycles of insertion into the bore 46 and removal of the bearing 10 from the bore 46. The results of the T1, T2 and T3 tests for the test series 1 bearing 10 are summarized below in Table 1. The test results demonstrated a maximum increase in the inside diameter (Δ D1) of the bore 46 of 0.02 mm with no damage to the inner surface 44. The test results also demonstrated no burrs or chipping of the exterior surface 12E'.

**Table 1**

| Before Test Series 1 (61.7 mm bearing OD, D2) | | | In Place | | After Removal of Test Bearing from Bore | | | |
|---|---|---|---|---|---|---|---|---|
| Test No. | Operating Torque (Nm) | D1 Bore (mm) | Force Tᵢₙ (t) | Operating Torque (Nm) | D1 Bore (mm) | Δ D1 Bore (mm) | OD D2 (mm) | Δ D2 OD (mm) |
| | First Assembly/Disassembly Cycle | | | | | | | |
| T1 | 35 | 61.6 | 1.5 | 35 | 61.62 | .002 | 61.69 | 0.01 |
| T2 | 34 | 61.5 | 3.5 | 34 | 61.52 | .002 | 61.59 | 0.11 |
| T3 | 34 | 61.4 | 5.5 | 34 | 61.42 | .002 | 61.43 | 0.27 |

| | Second Assembly/Disassembly Cycle | | | | | | | |
|---|---|---|---|---|---|---|---|---|
| T1 | 35 | 61.62 | 1.2 | 35 | 61.63 | 0.01 | 61.68 | 0.01 |
| T2 | 34 | 61.52 | 1.5 | 34 | 61.53 | 0.01 | 61.58 | 0.01 |
| T3 | 34 | 61.42 | 1.5 | 34 | 61.42 | 0 | 61.42 | 0.01 |

| | Third Assembly/Disassembly Cycle | | | | | | | |
|---|---|---|---|---|---|---|---|---|
| T1 | 35 | 61.63 | 4 | 35 | 61.63 | 0 | 61.58 | 0.1 |
| T3 | 34 | 61.42 | 3.2 | 34 | 61.42 | 0 | 61.48 | 0.1 |

| | Fourth Assembly/Disassembly Cycle | | | | | | | |
|---|---|---|---|---|---|---|---|---|
| T1 | 34 | 61.63 | 3 | 34 | 61.63 | 0 | 61.47 | 0.09 |

| | Fifth Assembly/Disassembly Cycle | | | | | | | |
|---|---|---|---|---|---|---|---|---|
| T1 | 34 | 61.63 | 1.8 | 34 | 61.63 | 0 | 61.45 | 0.02 |

### Test Series 2

In test series 2 six bearings 10 (i.e., T4, T5, T6, T7, T8 and T9) having an outside diameter D2 of 60.5 mm and the cylindrical exterior surface 12E' as illustrated and described herein with reference to FIGS. 5A and 5B were inserted and removed from one of the bores 46 defined by the housing 40. The initial inside diameter D1 of the bore 46 for the T4 test was 60.15 mm, which represented a 0.35 mm interference fit. The initial inside diameter D1 of the bore 46 for the T5 test was 60.165 mm, which represented a 0.335 mm interference fit. The initial inside diameter D1 of the bore 46 for the T6 test was 60.25 mm, which represented a 0.25 mm interference fit. The initial inside diameter D1 of the bore 46 for the T7 test was 60.35 mm, which represented a 0.15 mm interference fit. The initial inside diameter D1 of the bore 46 for the T8 test was 60.40 mm, which represented a 0.10 mm interference fit. The initial inside diameter D1 of the bore 46 for the T9 test was 60.41 mm, which represented a 0.09 mm interference fit. Thus, the tolerance in the inside diameter D1 encompassed a range of 0.26 mm (i.e., from 60.15 mm to 61.4 mm). The bearing 10 was manufactured from alloy steel and having a hardness of about 45 Rockwell C scale. The housing 40 was manufactured from an alloy steel having a hardness of about 30 Rockwell C scale.

An operating torque in Newton-meters (Nm) for the bearing 10 was measured and recorded before and after each cycle of insertion into the bore 46 and removal of the bearing 10 from the bore 46. The inside diameter D1 of the bore 46 was measured before and after each cycle of insertion into the bore 46 and removal of the bearing 10 from the bore 46. The outside diameter D2 of the bearing 10 was measured before and after each cycle of insertion into the bore 46 and removal of the bearing 10 from the bore 46. The condition of the exterior surface 12E' and the inner surface 44 was inspected before and after each cycle of insertion into the bore 46 and removal of the bearing 10 from the bore 46. The gripping force Tᵢₙ in metric tons (symbol t) corresponding to the magnitude of the force required for insertion into the bore 46 of the housing 40 was measured and recorded. The force Tₒᵤₜ in metric tons (symbol t) corresponding to the magnitude of the force required for removal of the bearing 10 from the bore 46 was also measured and recorded. The T4 and T9 tests were performed for one cycle of insertion into the bore 46 and removal of the bearing 10 from the bore 46. The T5, T6, T7 and T8 tests were each conducted for two cycles of insertion into the bore 46 and removal of the bearing 10 from the bore 46. The results of the T4, T5, T6, T7, T8 and T9 tests for the test series 2 bearing 10 are summarized below in Table 2. The test results demonstrated a maximum increase in the inside diameter (Δ D1) of the bore 46 of 0.015 mm with no damage to the inner surface 44. The test results also demonstrated no burrs or chipping of the exterior surface 12E'.

**Table 2**

| Before Test Series 2 (60.5 mm bearing OD, D2) | | | In Place | | After Removal of Test Bearing from Bore | | | | |
|---|---|---|---|---|---|---|---|---|---|
| Test No. | Operating Torque (Nm) | D1 Bore (mm) | Force Tᵢₙ (t) | Operating Torque (Nm) | Force Tₒᵤₜ (t) | D1 Bore (mm) | Δ D1 Bore (mm) | OD D2 (mm) | Δ D2 OD (mm) |
| | First Cycle | | | | | | | | |
| T4 | 31 | 60.15 | 4.3 | 34 | 4.0 | 60.165 | 0.015 | 60.31 | 0.19 |
| T5 | 31 | 60.165 | 4.8 | 40 | 4.0 | 60.17 | 0.005 | 60.27 | 0.23 |
| T6 | 32 | 60.25 | 3.7 | 33 | 3.8 | 60.255 | 0.005 | 60.35 | 0.015 |
| T7 | 32 | 60.35 | 2.7 | 30 | 2.4 | 60.355 | 0.005 | 60.41 | 0.09 |
| T8 | 30 | 60.40 | 2.2 | 32 | 2.2 | 60.41 | 0.01 | 60.45 | 0.05 |
| T9 | 34 | 60.41 | 2.0 | 34 | 2.0 | 60.41 | 0 | 60.42 | 0.05 |

| | Second Cycle | | | | | | | | |
|---|---|---|---|---|---|---|---|---|---|
| T5 | 31 | 60.17 | 2.2 | 31 | 2.2 | 60.175 | 0.005 | 60.25 | 0.02 |
| T6 | 32 | 60.255 | 3.0 | 32 | 3 | 60.265 | 0.001 | 60.28 | 0.07 |
| T7 | 32 | 60.355 | 2.6 | 32 | 2.6 | 60.335 | 0 | 60.40 | 0.01 |
| T8 | 32 | 60.41 | 2.6 | 32 | 2.4 | 60.410 | 0 | 60.45 | 0 |

### Test Series 3

Test series 3 involved dynamic cyclic load testing for two test bearings T10 and T11 each having an outside diameter D2 of 60.5 mm and the cylindrical exterior surface 12E' as illustrated and described herein with reference to FIGS. 5A and 5B. The test bearings T10 and T11 had an operating torque of 34 Nm and during installation in the bore 46. The test bearings T10 and T11 were inserted into one of the bores 46 defined by the housing 40. The initial inside diameter D1 of the bore 46 for the T10 and T11 test bearings was 60.32 mm, which represented a 0.18 mm interference fit. The gripping force Tᵢₙ in metric tons (symbol t) corresponding to the magnitude of the force required for insertion of the test bearings T10 and T11 into the respective bores 46 was 3.2 metric tons. The test bearing T10 was subject to a load of about 40 kN. While the constant load applied the tested bearing oscillates 45,000 cycles of +/- 10° rotation (at 1Hz frequency). The results of the test for the test bearing T10 indicated no movement between the test bearing T10 exterior surface 12E' and the inner surface 44 of the housing 40. The test bearing T11 was subject to a load of about 33 kN While the constant load applied the tested bearing oscillates 1,000,000 cycles of +/- 10° rotation (at 1Hz frequency). The results of the test for the test bearing T11 indicated no movement between the test bearing T11 exterior surface 12E' and the inner surface 44 of the housing 40.

### Test Series 4

Test series 4 involved cyclic static load testing of a test bearings T12 having an outside diameter D2 of 60.5 mm and the cylindrical exterior surface 12E' as illustrated and described herein with reference to FIGS. 5A and 5B. The test bearing T12 had an operating torque of 34 Nm and during installation in the bore 46. The test bearing T12 was inserted into one of the bores 46 defined by the housing 40. The initial inside diameter D1 of the bore 46 for the T12 test bearings was 60.3 mm, which represented a 0.2 mm interference fit. The gripping force Tᵢₙ in metric tons (symbol t) corresponding to the magnitude of the force required for insertion of the test bearing T12 into the respective bores 46 was 3.2 metric tons. The test bearing T12 was subject to a radial load of about 80 kN (kilo Newtons) and then the load released for 100 cycles on each side of the test bearing T12. The results of the test for the test bearing T12 resulted in an increase in the inside diameter D1 of the bore 46 to 61.31 mm, an increase of 0.01 mm. The outside diameter D2 of the test bearing T12 was 60.37 mm, after being extracted from the bore 46. This represented a 0.13 mm decrease in the outside diameter D2 of the test bearing T12. The operating torque of the test bearing T12 was 35 Nm, after testing. The test results also demonstrated no burrs or chipping of the exterior surface 12E' and no damage to the inner surface 44.

While the present disclosure has been described with reference to various exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A bearing comprising:
an outer race defining a first exterior surface and an interior area defined by an arcuate interior surface;
an inner race defining a second exterior surface, the second exterior surface being arcuate and complimentary to the arcuate interior surface, the inner race being disposed at least partially in the interior area and being rotatable relative to the outer race;
the first exterior surface having a plurality of protrusions extending therefrom, the protrusions being deformable in response to engagement with an interior surface defined by a bore of a housing; and
the protrusions being configured to create a predetermined gripping force to releaseably grip an inner surface defined by the bore of the housing for a predetermined dimensional tolerance of the bore.

2. The bearing of claim 1, wherein the predetermined dimensional tolerance is 0.2 mm.

3. The bearing of claim 1, wherein the gripping force is about 2 metric tons to about 5 metric tons.

4. The bearing of claim 1, wherein the protrusions define a compression absorption annulus that attenuates force transmission radially inward through the outer race to the inner race to maintain an operating torque of the bearing at a predetermined magnitude.

5. The bearing of claim 1, wherein the protrusions are slidably engageable with the inner surface defined by the bore for a predetermined number of cycles while maintaining the predetermined gripping force
or wherein the protrusions are slidably engageable with the inner surface defined by the bore for a predetermined number of cycles while maintaining the predetermined dimensional tolerance.

6. The bearing of claim 1, wherein the plurality of protrusions are concentric with one another, extend circumferentially around the outer race and extend radially outward.

7. The bearing of claim 1, wherein the plurality of protrusions comprise a knurled pattern of protrusions extending outward.

8. The bearing of claim 6, wherein adjacent ones of the plurality of protrusions have peaks having centers that are axially spaced apart by a distance of 1.0 mm to 1.5 mm.

9. The bearing of claim 6, wherein adjacent ones of the plurality of protrusions have valleys having centers that are axially spaced apart by a distance of 1.0 mm to 1.5 mm.

10. The bearing of claim 8, wherein each of the peaks has a flat surface having a width of about 0.02 mm.

11. The bearing of claim 6, wherein adjacent ones of the plurality of protrusions have peaks and valleys that are radially spaced apart from one another by a distance of 0.61 mm to 0.62 mm.

12. A bearing comprising:
an outer race defining a first exterior surface and an interior area defined by an arcuate interior surface;
an inner race defining a second exterior surface, the second exterior surface being arcuate and complimentary to the arcuate interior surface, the inner race being disposed at least partially in the interior area and being rotatable relative to the outer race;
the first exterior surface having a plurality of protrusions extending therefrom, the protrusions being deformable in response to engagement with an interior surface defined by a bore of a housing; and
the plurality of protrusions are concentric with one another, extend circumferentially around the outer race and extend radially outward.

13. The bearing of claim 12, wherein the plurality of protrusions have peaks having centers that are axially spaced apart by a distance of 1.0 mm to 1.5 mm, wherein in particular each of the peaks has a flat surface having a width of about 0.02 mm.

14. The bearing of claim 12, wherein adjacent ones of the plurality of protrusions have valleys having centers that are axially spaced apart by a distance of 1.0 mm to 1.5 mm.

15. The bearing of claim 12, wherein adjacent ones of the plurality of protrusions have peaks and valleys that are radially spaced apart from one another by a distance of 0.61 mm to 0.62 mm.
